# FASCICULE DE BREVET EUROPEEN

(11) **EP 1 938 684 B1**
(45) Date de publication et mention de la délivrance du brevet: **22.07.2009**
(21) Numéro de dépôt: 07123069.2
(22) Date de dépôt: 12.12.2007
(51) Int. Cl.: A01N 1/00, A01N 31/02, A01N 31/06

(54) **Utilisation de polyoxymethylènedialkyléthers et/ou d'acétals de dialdéhyde pour la conservation du corps humain ou animal et compositions les comprenant**
Verwendung von Polyoxymethylendialkylethern und/oder Dialdehydacetalen zur Konservierung von menschlichen oder tierischen Körpern und diese enthaltende Zusammensetzungen
Use of polyoxymethylendialkylethers and/or dialdehydacetals for the preservation of human or animal bodies and compositions comprising the same

(30) Priorité: 27.12.2006 FR 0611459
(43) Date de publication de la demande: 02.07.2008
(73) Titulaire: ARKEMA FRANCE, 92700 Colombes (FR)
(72) Inventeur: Dubois, Jean-Luc, 69390, MILLERY (FR)
(74) Mandataire: Cabinet Plasseraud

(56) Documents cités:
- DATABASE WPI Week 200004 Derwent Publications Ltd., London, GB; AN 2000-051485 XP002434828 & RU 2 116 725 C1 (GAIVORONSKI ET AL.) 10 août 1998 (1998-08-10)

## Description

La présente invention est relative au domaine de la conservation des cadavres humains ou animaux. Plus particulièrement, l'invention concerne une nouvelle utilisation, à visée non thérapeutique, d'au moins un composé du type POM (PolyOxyMéthylènedialkyléther) et/ou d'acétals de dialdéhyde pour conserver et/ou embaumer un corps humain ou animal.

La thanatopraxie, ou embaumement du corps mort, est une pratique réclamée par les familles des défunts pour conserver au corps un aspect acceptable jusqu'à son inhumation ou sa crémation. Cependant, dans certaines circonstances, cet acte peut devenir obligatoire, notamment dans les cas de déplacements internationaux des corps, de transports des corps avant crémation dans des cercueils à parois plus minces que ceux destinés à être enterrés, voire en l'absence de cercueil, dans certains cas de réintégration à leur domicile du corps de personnes décédées dans un centre hospitalier, et aussi dans certains cas de dépôt en caveau provisoire.

En outre, la conservation hygiénique des corps est le moyen moderne et efficace d'éviter la propagation des maladies par le contact des vivants et des morts ainsi que la pollution et la souillure des objets et de l'habitat.

On connaît différents composés qui sont utilisés pour embaumer et/ou conserver les cadavres humains ou animaux. Notamment, le phénol et des aldéhydes tels que le formaldéhyde et le glutaraldéhyde (pentanedial-1,5) sont couramment utilisés dans ce domaine. Cependant, ces composés sont malodorants, très toxiques et ont tendance à laisser les corps traités dans un état rigide.

Le brevet français FR 1 457 037 divulgue une composition de conservation de corps d'animaux morts comprenant des δ-lactones qui contiennent un hétéroatome d'oxygène supplémentaire dans le noyau. Cette composition peut être appliquée au cadavre par immersion, par infusion ou par injection.

Le brevet américain US 5 827 511 décrit une composition injectable par voie artérielle comprenant du glutaraldéhyde, au moins un éther aromatique d'éthanol, au moins un agent hydratant comme l'éthylène glycol et au moins un alcool.

Le brevet EP 1 127 490 décrit une composition comprenant au moins du glycérol et à titre de principe actif un hydroalcoolat de propolis. Cette composition peut être badigeonnée sur le cadavre ou injectée par voie artérielle.

Le brevet WO2004/093541 divulgue une composition injectable comprenant de l'éthanedial encore appelé glyoxal et un solvant polaire aprotique comme le DMSO (diméthylsulfoxide) en solution aqueuse.

Enfin, le brevet RU 2 116 725 décrit une solution à base de diéthylacétal (ou 1,1-diéthoxyéthane) pour embaumer les corps.

Toutefois, il existe toujours le besoin de produits nouveaux qui permettent d'éviter la rigidité, la pâleur, les émanations d'odeurs et/ou la déshydratation du corps tout en présentant une faible toxicité pour le thanatopracteur et un faible coût.

Or, la demanderesse a maintenant découvert qu'il était possible d'utiliser au moins un composé de type PolyOxyméthylènedialkyléther (POM) et/ou des acétals de dialdéhydes pour conserver et/ou embaumer un corps humain ou animal et remédier ainsi à un ou plusieurs des inconvénients précités.

Les composés POM sont connus mais pour des utilisations différentes. Par exemple, le brevet français FR 2 881 750 décrit une utilisation des POM en tant que carburants pour piles à combustible.

De même, les composés acétals de dialdéhydes sont connus mais par exemple pour être utilisés en tant que synthons intéressants pour la synthèse organique (WO 02/42524), en tant qu'additifs (EP0855436), ou en tant qu'adhésifs (FR2844802) comme notamment le 1,1,2,2-tétraéthoxyéthane.

L'invention vise plus particulièrement l'utilisation d'au moins un composé de formule (I) R-(OCH₂)ₙ-OR' dans laquelle R et R', identiques ou différents, représentent un radical alkyle, linéaire ou ramifié, comportant de 1 à 5 atomes de carbone et n est un indice de valeur comprise entre 1 et 8, et/ou d'au moins un acétal de dialdéhyde de formule (II) : 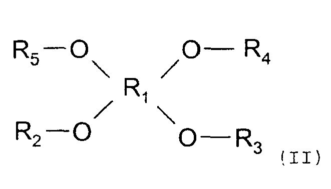 où R₂, R₃, R₄ et R₅ désignent indépendamment un radical alkyle, linéaire ou ramifié, comportant de 1 à 8 atomes de carbone, ou R₂ et R₅ et/ou R₃ et R₄ forment ensemble et avec les deux atomes d'oxygène auxquels ils sont rattachés un hétérocycle saturé ou insaturé à 5 ou 6 chaînons éventuellement substitué par un ou plusieurs groupes choisis parmi OH, CH₂OH ou un radical alkyle, linéaire ou ramifié, comportant de 1 à 8 atomes de carbone ; et R₁ représente un groupe CH-R₆-CH où R₆ forme une liaison ou représente un radical alkylène linéaire ou ramifié, comportant de 1 à 5 atomes de carbone ou un carbocycle saturé ou insaturé comportant de 3 à 8 atomes de carbone; ou R₁ est un carbocycle saturé ou insaturé comportant de 3 à 8 atomes de carbone.

Dans le contexte de cette description, le terme « compris entre » doit être interprété comme incluant les bornes indiquées.

Au sens de l'invention, on entend par « conserver », le fait que l'action enzymatique est arrêtée ou freinée dans le tissu humain ou animal, par rapport au tissu non traité, ce qui empêche ou ralentit la destruction auto-catalytique de ce tissu, et/ou que les tissus résistent mieux aux attaques extérieures des bactéries et des mycètes que des tissus non traités.

Les composés (I) utilisés selon l'invention sont des PolyOxyMéthylènedialkyléthers qui sont désignés par le sigle POM pour PolyOxyMéthylène auquel sont adjointes une ou deux lettres (POMXX) permettant d'identifier les radicaux alkyle(s) R et R', M pour méthyle, E pour éthyle, P ou i-P pour (iso)propyle, B pour butyle, Pe pour pentyle et H pour hexyle, ainsi que par un indice correspondant au nombre n de motifs (CH₂O)(POMXXₙ).

Ces produits sont dénommés par exemple :
- POMMₙ (polyoxyméthylènediméthyléther) quand l'alkyle est le groupement méthyle, CH₃-(OCH₂)ₙ-OCH₃,
- POMEₙ (polyoxyméthylènediéthyléther) quand l'alkyle est le groupement éthyle,
- POMPₙ (polyoxyméthylènedipropyléther) quand l'alkyle est le groupement propyle,
- POMBₙ (polyoxyméthylènedibutyléther) quand l'alkyle est le groupement butyle.

On appellera POMMn le composé avec n unités oxyméthylène (formol). Ainsi le méthylal (n=1), sera appelé POMM₁, et le butylal sera appelé POMB₁. Si on utilise un mélange de produits issus d'une même synthèse, on l'appellera par exemple POMM₃₋₈, pour un mélange contenant des POMM de n = 3 à 8.

Ces POM sont dissymétriques dans le cas où R est différent de R'. On pourra par exemple avoir un POMME₂ qui désignera un polyoxyméthylèneméthyléthyléther avec deux motifs (CH₂O), soit CH₃- (OCH₂)₂-OC₂H₅.

Les avantages que présentent les POM sont vraisemblablement liés à leur nature chimique qui dépend elle-même de leur mode de synthèse, par lequel il est possible de contrôler la longueur de chaîne. D'une manière générale, le point d'ébullition des POM augmente avec le nombre d'unités formol (CH₂O) et avec la longueur de la chaîne alkyle. Par contre, la solubilité dans l'eau diminue avec la longueur de chaîne (-CH₂O-)ₙ et avec la longueur des chaînes alkyle.

Du point de vue de la toxicité, le méthylal (POMM₁), l'éthylal (POME₁) et le butylal (POMB₁) sont beaucoup moins toxiques que le méthanol et le formol.

Un autre avantage des POM est leur faible coût. En effet, la synthèse des POM fait appel au méthanol et au formol, lui même produit à partir de méthanol.

La synthèse des POM est bien connue depuis de nombreuses années.

Notamment, le livre de J.F. Walker, "FORMALDEHYDE", Robert E. Krieger Publishing Company, Huntington, New York, 3e Edition de 1975 est un ouvrage de référence en la matière. On peut en effet y trouver la description des modes de synthèse aux pages 167 et suivantes, d'une part, et 264 et suivantes, d'autre part. Ces procédés de synthèse sont fondés sur une catalyse acide de la réaction d'un alcool (méthanol ou éthanol) ou d'un acétal (méthylal ou éthylal), sur du formol ou un composé équivalent. Ce type de synthèse est également illustré dans de nombreux documents de brevets tels que US 2,449,469 ou JP 47-40772.

D'autres méthodes de synthèse fondées sur une catalyse de type acides de Lewis ont été également décrites. On peut citer le document de brevet GB 1120524 qui décrit la synthèse de polyoxyméthylènes diéthers stables avec des catalyseurs ioniques de type acides de Lewis.

Les POM mixtes, c'est-à-dire ceux répondant à la formule générale R-(OCH₂)ₙ-OR' avec R différent de R' sont obtenus soit par synthèse directe selon les procédés visés ci-dessus, soit par transacétalisation de deux POM symétriques (R = R') différents.

Selon un mode de réalisation avantageux, l'invention vise l'utilisation d'au moins un composé choisi parmi CH₃- (OCH₂) -OCH₃, CH₃- (OCH₂)₂-OCH₃, CH₃- (OCH₂)₃-OCH₃, CH₃-(OCH₂)₄-OCH₃, CH₃-(OCH₂)₅-OCH₃, CH₃-(OCH₂)₆-OCH₃, CH₃- (OCH₂)₇-OCH₃, CH₃- (OCH₂)₈-OCH₃, C₂H₅- (OCH₂) -OC₂H₅, C₂H₅- (OCH₂)₂-OC₂H₅. C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradecane, et leurs mélanges et très préférentiellement parmi CH₃-(OCH₂)-OCH₃, CH₃-(OCH₂)₂-OCH₃, C₂H₅- (OCH₂) OC₂H₅, C₄H₉- (OCH₂) -OC₄H₉, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradécane, et leurs mélanges.

Selon un mode de réalisation avantageux, l'invention concerne l'utilisation d'au moins un composé de formule R-(OCH₂)ₙ-OR' dont la structure est symétrique (R = R').

Selon un mode de réalisation préféré, l'invention vise l'utilisation d'un mélange de composés de formule R-(OCH₂)ₙ-OR dans laquelle soit R représente un méthyle et n va de 2 à 8, soit R représente un éthyle et n va de 1 à 8.

Selon un mode de réalisation encore plus préféré, l'invention vise l'utilisation d'au moins un composé POMM₂₋₈ qui est un mélange de composés de formule CH₃-(OCH₂)ₙ-OCH₃ avec n compris entre 2 et 8, dont la composition est la suivante :

| n | 2 | 3 | 4 | 5 | 6 | 7 | 8 |
|---|---|---|---|---|---|---|---|
| % | 25-50 | 20-40 | 10-25 | 5-10 | 2-5 | <2 | <1 |

Plus particulièrement, une composition préférée d'un composé POMM₂₋₈ est la suivante :

| N | 2 | 3 | 4 | 5 | 6 | 7 | 8 |
|---|---|---|---|---|---|---|---|
| % | 44 | 32 | 14 | 6 | 2,5 | 1 | <1 |

Selon un mode de réalisation encore plus préféré, l'invention vise l'utilisation d'au moins un composé POME₁₋₈ qui est un mélange de composés de formule C₂H₅-(OCH₂)ₙ-OC₂H₅ avec n compris entre 1 et 8, dont la composition est la suivante :

| n | 1 | 2 | 3 | 4 | 5 | 6 | 7 | 8 |
|---|---|---|---|---|---|---|---|---|
| % | 58 | 26 | 10 | 4 | 1,5 | <1 | <1 | <1 |

Comme composés de formule (II), on peut citer, par exemple, les diacétals de glyoxal (ethanedial), de propanedial, et de glutaraldéhyde (pentanedial), notamment ceux, nommés ci-après en terminologie anglo-saxonne, de formule: 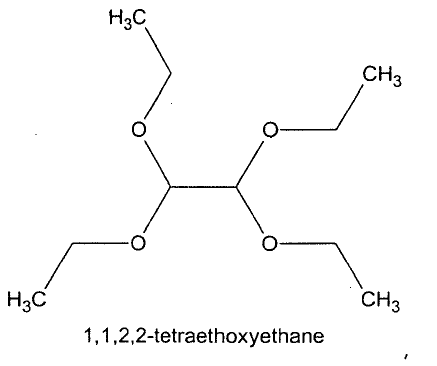 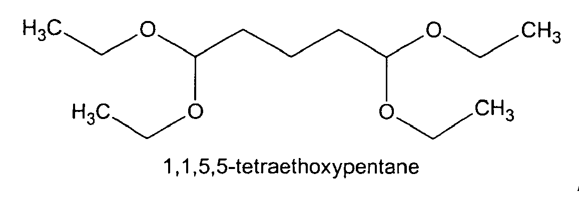 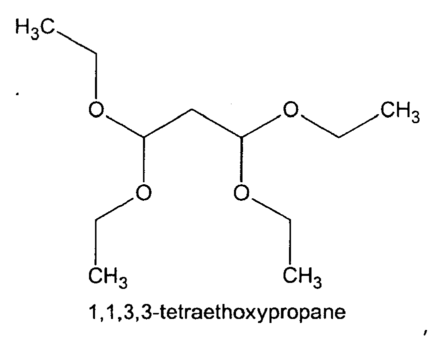 ou 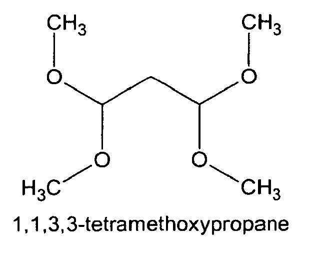 les diacétals de malonaldéhyde, les diacétals de succinaldéhyde,
et également les diacétals cycliques de dialdéhyde, 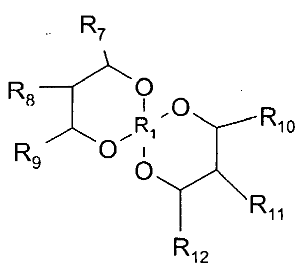 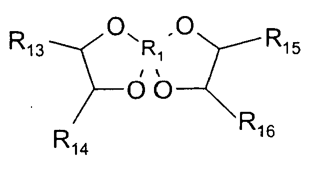 où R₇-R₁₆ représentent indépendamment H, OH, CH₂OH ou un radical alkyle, linéaire ou ramifié, comportant de 1 à 8 atomes de carbone ; et R₁ représente un groupe CH-R₆-CH où R₆ est défini tel que précédemment, tels que par exemple : 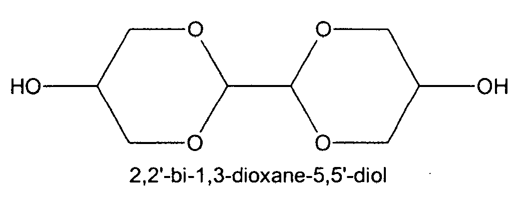 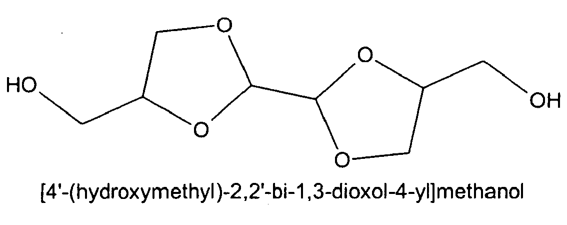 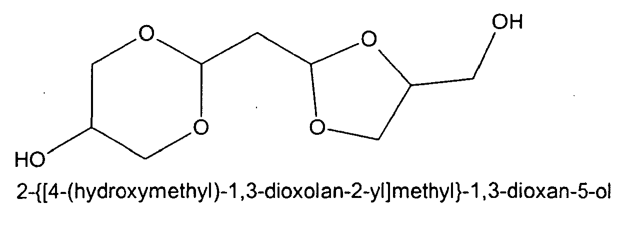 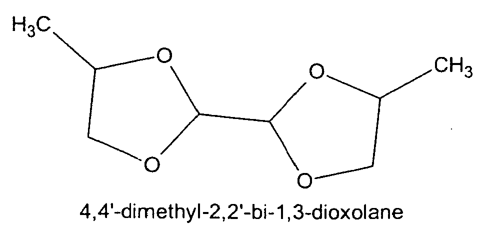 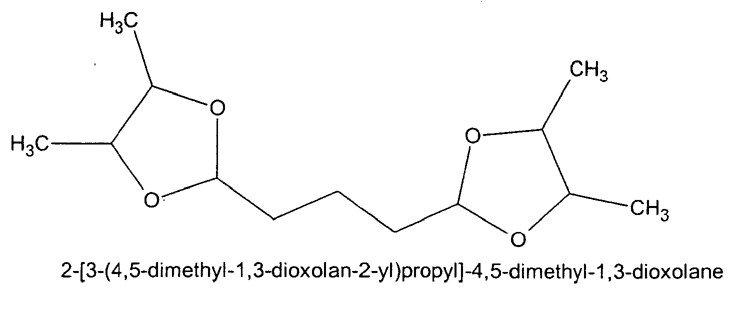 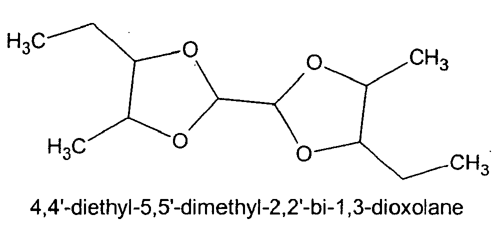 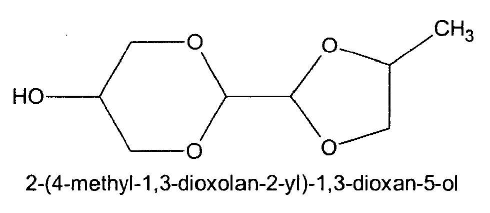 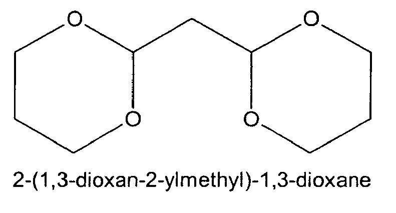 ou

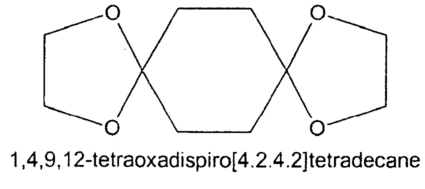

Les méthodes de synthèse des composés (II) selon l'invention sont bien connues. Par exemple, la demande de brevet français FR2844802 indique que des diacétals peuvent être obtenus par réaction de dialdéhydes tels que le glyoxal, le malonaldéhyde, ou le glutaraldéhyde avec des alcools tels que par exemple des monoalcools comme le méthanol, l'éthanol, des diols comme l'éthylèneglycol, le diéthylèneglycol, le 1,4-butanediol, le néopentylglycol, ou des polyols comme le glycérol, le penta-érythritol.

La présente invention est également relative à une composition comprenant au moins l'un desdits composés de formule (I) et/ou (II) et du glycérol.

Selon un mode de réalisation avantageux, la composition comprend 12-70% en volume d'au moins un composé de formule (I) et/ou (II), 10-15% en volume de glycérol, 15-75% en volume d'au moins un alcool tel que par exemple l'éthanol, le propanol et l'isopropanol et 0-10% en volume d'au moins un agent colorant tel que par exemple le jaune orangé S, le dioxyde de titane et l'oxyde de zinc et/ou aromatisant tel que notamment la menthe, le coriandre, le thym, la citronnelle et le pamplemousse.

Cette composition peut en outre contenir divers constituants tels qu'un agent antiseptique, qui est avantageusement un savon ; un agent humectant tel que l'éthylène glycol et un polyéthylène glycol ; et leurs mélanges.

Un autre objet de l'invention concerne un procédé pour conserver un corps humain ou animal et/ou embaumer un corps mort comprenant l'administration au corps d'une composition comprenant au moins un composé de formule (I) et/ou de formule (II) dans laquelle R₁, R₂, R₃, R₄ et R₅ sont tels que décrits précédemment.

Deux avantages du procédé selon l'invention sont la rapidité d'exécution, c'est-à-dire que la vitesse de décoagulation est importante, ainsi que la rapidité de soin.

Dans un premier mode de réalisation avantageux, la composition est injectée par voie intra-artérielle dans le corps.

Préférentiellement, la composition injectée par voie artérielle est une solution aqueuse dont la concentration en composés de formule (I) et/ou en composés de formule (II) va de 1 à 25% en poids. Encore plus préférentiellement, la composition est injectée pure en cavité.

Dans un second mode de réalisation avantageux, la composition est perfusée dans le corps.

Dans un troisième mode de réalisation avantageux, le corps est immergé dans la composition.

Dans un quatrième mode de réalisation avantageux, la composition est appliquée par voie topique sur le corps.

Ces modes d'administration sont bien connus de l'homme du métier.

Les exemples qui suivent sont donnés à titre purement illustratif et nullement limitatif de l'invention.

### Exemples

### Exemple 1

On injecte par voie intra-artérielle dans la dépouille mortelle d'un cochon, une composition comprenant 600ml de POMM, 200ml de glycérol, 100ml de solution saline, 80ml de savon et 20ml de colorant et d'essence végétales.

### Exemple 2

On badigeonne la dépouille mortelle d'un canard d'une composition comprenant 600ml de 1,1,2,2-tétraéthoxyéthane disponible chez Acros Organics, 200ml de glycérol, 100ml de solution saline, 80ml de savon et 20ml de colorant et d'essence végétales.

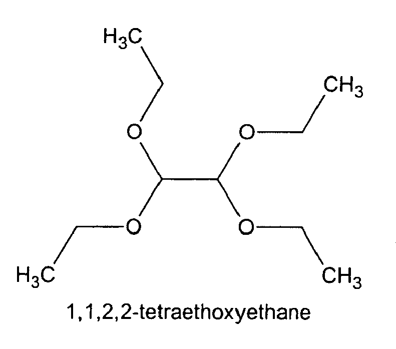

### Exemple 3

On reproduit l'exemple 2 en remplaçant le 1,1,2,2 tétraéthoxyéthane par le 1,1,3,3-tetraéthoxypropane (disponible chez Acros Organics).

Le 1,1,3,3-tétraéthoxypropane (CAS RN 122-31-6), disponible chez Acros Organics, a un point d'ébullition de 220 °C et un point éclair de 88°C.

### Exemple 4

On reproduit l'exemple 2 en remplaçant le 1,1,2,2 tétraéthoxyéthane par le 1,1,3,3-tétraméthoxypropane (disponible chez Acros Organics).
Le 1,1,3,3-tetraméthoxypropane (CAS RN 102-52-3), disponible chez Acros Organics, a un point d'ébullition de 183 °C et un point éclair de 60°C.

### Exemple 5

On badigeonne la dépouille mortelle d'un canard d'une composition comprenant 600ml de 1,4,9,12-tétraoxadispiro[4,2,4,2]tétradécane (disponible chez MaybridgeSCR), 200ml de glycérol, 100ml de solution saline, 80ml de savon, et 20ml de colorant et d'essence végétales.

### Exemple 6

On prépare une dilution d'un fluide de conservation qui consiste soit en du POMM₂₋₈, soit en du POME₁₋₈, en mélangeant 800 ml de fluide à 800 ml d'eau tiède.

La composition du PCMM₂₋₈ utilisé est la suivante :

| n | 2 | 3 | 4 | 5 | 6 | 7 | 8 |
|---|---|---|---|---|---|---|---|
| % | 44 | 32 | 14 | 6 | 2,5 | 1 | <1 |

La composition du POME₁₋₈ utilisé est la suivante :

| n | 1 | 2 | 3 | 4 | 5 | 6 | 7 | 8 |
|---|---|---|---|---|---|---|---|---|
| % | 58 | 26 | 10 | 4 | 1,5 | <1 | <1 | <1 |

On injecte le fluide de conservation dans la dépouille mortelle d'hommes et de femmes d'âge variable par injection électrique. Cette injection est effectuée à l'aide d'une pompe électrique.

Après l'injection, on procède à une extériorisation par drainage.

L'intervention ne dure que 30 min, ce qui est relativement rapide.

Des observations sont réalisées les jours suivants (J+1 à J+5 selon le cas).

L'ensemble des conditions de traitement et des observations est récapitulé dans le tableau suivant :

| **Age** | **60 ans** | **60 ans** | **70 ans** | **67 ans** | **54 ans** | **70 ans** | **75 ans** |
|---|---|---|---|---|---|---|---|
| **Sexe** | **F** | **M** | **F** | **F** | **M** | **M** | **F** |
| Examen corporel | Hématomes | Ictère | Hématomes | Décoloration* | Décoloration ** | Corps sain | Corps sain |
| Taille (cm) | 170 | 175 | 170 | 165 | 180 | 180 | 16 |
| Poids (kg) | 100 | 60 | 80 | 60 | 85 | 80 | 60 |
| Produit | POME1-8 | POMM2-8 | POMM2-8 | POMM2-8 | POMM2-8 | POMM2-8 | POMM2-8 |
| Technique d'injection | Carotide Fémorale | Fémorale | Fémorale | Carotide | Carotide | Carotide | Fémorale |
| Injection électrique | oui | Oui | Oui | oui | oui | oui | oui |
| Méthode de drainage | Cardiaque | Cardiaque | Cardiaque | Cardiaque Veineux (jugulaire) | Cardiaque Veineux (jugulaire) | Cardiaque | Cardiaque |
| Quantité injectée (L) | 8 | 7,5 | 7,5 | 8 | 8 | 5 | 5 |
| Concentration (% poids dans l'eau) | 3,8 | 3,8 | 3,8 | 5 | 5 | 5 | 5 |
| Volume en cavité (1) | 0,5 | 0,5 | 0,5 | 0,4 | 0,3 | 0,3 | 0,3 |
| Concentration (% poids) | 100 | 100 | 100 | 100 | 100 | 100 | 100 |
| Quantité drainée (1) | 1,6 | 2 | 6 | 5 | 6,5 | 3 | 3 |
| Observation Observations J=0 date de l'injection | Rien à signaler à J+2 | Rien à signaler à J+2, pas d'odeur, pas de modification de coloration du corps | J+1, J+2, J+4 J+5 Mêmes constatations : pas d'odeur, pas de traces de déshydratation, ni de putréfaction, pas de gaz, très esthétique | J+1, J+3, J+4 J+5 Mêmes constatations, pas de problème de conservation | J+1, J+2, J+3 Mêmes constatations : aucun problème de conservation | J+2 Aucun problème de conservation | J+3 Aucun problème de conservation |

| | | | | | | | |
|---|---|---|---|---|---|---|---|
| * décès par hémorragie gastrique ** cyanoses très prononcées, tabagisme aigu, sous traitement anticoagulant | | | | | | | |

D'après ce tableau, on constate que même plusieurs jours après l'injection du fluide de conservation, aucune modification de l'aspect du corps, aucune odeur cadavérique, aucune trace de moisissure, et aucun écoulement des orifices du visage ni du bas-ventre n'est observé.

Notamment, les tissus de surface sont encore extrêmement souples et les lèvres sont restées fines. En outre, la peau demeure légèrement teintée par le fluide, sans qu'il soit nécessaire de recourir à une crème maquillante.

Les composés selon l'invention permettent ainsi de rendre l'intervention pour l'embaumement des corps aisée et rapide.

## Revendications

1. Utilisation d'au moins un composé de formule
(I) R-(OCH₂)ₙ-OR' dans laquelle R et R', identiques ou différents, représentent un radical alkyle, linéaire ou ramifié, comportant de 1 à 5 atomes de carbone et n est un indice de valeur comprise entre 1 et 8, et/ou
(II) 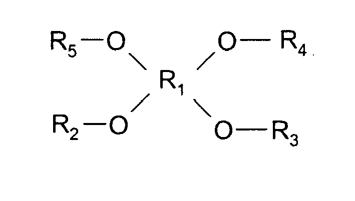
où R₂, R₃, R₄ et R₅ désignent indépendamment un radical alkyle, linéaire ou ramifié, comportant de 1 à 8 atomes de carbone, ou R₂ et R₅ et/ou R₃ et R₄ forment ensemble et avec les deux atomes d'oxygène auxquels ils sont rattachés un hétérocycle saturé ou insaturé à 5 ou 6 chaînons éventuellement substitué par un ou plusieurs groupes choisis parmi OH, CH₂OH ou un radical alkyle, linéaire ou ramifié, comportant de 1 à 8 atomes de carbone ; et R₁ représente un groupe CH-R₆-CH où R₆ forme une liaison ou représente un radical alkylène linéaire ou ramifié, comportant de 1 à 5 atomes de carbone ou un carbocycle saturé ou insaturé comportant de 3 à 8 atomes de carbone; ou R₁ est un carbocycle saturé ou insaturé comportant de 3 à 8 atomes de carbone, pour la conservation du corps humain ou animal et/ou l'embaumement des corps morts.

2. Utilisation selon la revendication 1, **caractérisée en ce que** le composé est choisi parmi CH₃-(OCH₂)-OCH₃, CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradécane, et leurs mélanges et très préférentiellement parmi CH₃-(OCH₂)-OCH₃, CH₃-(OCH₂)₂-OCH₃, C₂H₅-(OCH₂)-OC₂H₅, C₄H₉-(OCH₂)-OC₄H₉, le 1,1,2,2-tétraéthoxyéthane, le 1,1,3,3-tétraéthoxypropane, le 1,1,3,3-tétraméthoxypropane, le 1,4,9,12-tétraoxadispiro[4,2,4,2]tétradécane, et leurs mélanges.

3. Utilisation selon la revendication 1 ou la revendication 2, **caractérisée en ce que** le composé de formule (I) est de structure symétrique.

4. Utilisation selon l'une quelconque des revendications 1 à 3, **caractérisé en ce que** le composé est le POMM₂₋₈ qui est un mélange de composés de formule CH₃-(OCH₂)ₙ-OCH₃ avec n compris entre 2 et 8.

5. Utilisation selon l'une quelconque des revendications 1 à 4, **caractérisé en ce que** le composé est le POME₁₋₈ qui est un mélange de composés de formule C₂H₅-(OCH₂)ₙ-OC₂H₅ avec n compris entre 1 et 8.

6. Composition comprenant au moins un des composés selon l'une quelconque des revendications 1 à 5 et du glycérol.

7. Composition comprenant 12-70% en volume dudit composé selon l'une quelconque des revendications 1 à 5, 10-15% en volume de glycérol, 15-75% en volume d'au moins un alcool et 0-10% en volume d'au moins un agent colorant et/ou aromatisant.

8. Procédé pour conserver un corps humain ou animal et/ou embaumer un corps mort comprenant l'administration audit corps d'une composition comprenant au moins un composé selon l'une quelconque des revendications 1 à 5.

9. Procédé selon la revendication 8, **caractérisé en ce que** la composition est injectée par voie intra-artérielle dans ledit corps.

10. Procédé selon la revendication 8, **caractérisé en ce que** la composition est perfusée dans ledit corps.

11. Procédé selon la revendication 8, **caractérisé en ce que** ledit corps est immergé dans la composition.

12. Procédé selon la revendication 8, **caractérisé en ce que** la composition est appliquée par voie topique sur ledit corps.

## Claims

1. Use of at least one compound of formula
(I) R-(OCH₂)ₙ-OR' wherein R and R', identical or different, represent a linear or branched alkyl radical comprising 1 to 5 carbon atoms and n is an index with a value comprised between 1 and 8, and/or
(II) 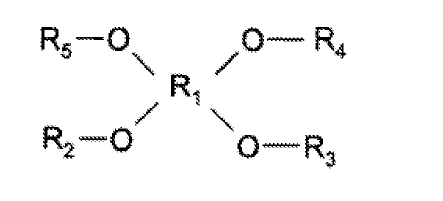
where R₂, R₃, R₄ and R₅ designate independently a linear or branched alkyl radical comprising 1 to 8 carbon atoms, or R₂ and R₅ and/or R₃ and R₄ form together and with the two oxygen atoms to which they are attached a saturated or unsaturated heterocycle with 5 or 6 members optionally substituted by one or more groups chosen from OH, CH₂OH or a linear or branched alkyl radical comprising 1 to 8 carbon atoms; and R₁ represents a CH-R₆-CH group where R₆ forms a bond or represents a linear or branched alkylene radical, comprising 1 to 5 carbon atoms or a saturated or unsaturated carbocycle comprising 3 to 8 carbon atoms; or R₁ is a saturated or unsaturated carbocycle comprising 3 to 8 carbon atoms, for the preservation of the human or animal body and/or embalming of dead bodies.

2. Use according to claim 1, **characterized in that** the compound chosen from CH₃-(OCH₂)-OCH₃, CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, 1,1,2,2-tetraethoxyethane, 1,1,3,3-tetraethoxypropane, 1,1,3,3-tetramethoxypropane, 1,4,9,12-tetraoxadispiro [4,2,4,2]tetradecane, and mixtures thereof and very preferentially from CH₃-(OCH₂)-OCH₃, CH₃-(OCH₂)₂-OCH₃, C₂H₅-(OCH₂)-OC₂H₅, C₄H₉-(OCH₂)-OC₄H₉, 1,1,2,2-tetraethoxyethane, 1,1,3,3-tetraethoxypropane, 1,1,3,3-tetramethoxypropane, 1,4,9,12-tetraoxadispiro[4,2,4,2]tetradecane, and mixtures thereof.

3. Use according to claim 1 or claim 2, **characterized in that** the compound of formula (I) is of symmetrical structure.

4. Use according to any one of claims 1 to 3, **characterized in that** the compound is POMM₂₋₈ which is a mixture of compounds of formula CH₃-(OCH₂)ₙ-OCH₃ with n comprised between 2 and 8.

5. Use according to any one of claims 1 to 4, **characterized in that** the compound is POME₁₋₈ which is a mixture of compounds of formula C₂H₅-(OCH₂)ₙ-OC₂H₅ with n comprised between 1 and 8.

6. Composition comprising at least one of the compounds according to any one of claims 1 to 5 and glycerol.

7. Composition comprising 12-70% by volume of said compound according to any one of claims 1 to 5, 10-15% by volume of glycerol, 15-75% by volume of at least one alcohol and 0-10% by volume of at least one colouring agent and/or aroma producer.

8. Process for preserving a human or animal body and/or embalming a dead body comprising the administration to said body of a composition comprising at least one compound according to any one of claims 1 to 5.

9. Process according to claim 8, **characterized in that** the composition is injected into said body by intraarterial route.

10. Process according to claim 8, **characterized in that** the composition is perfused into said body.

11. Process according to claim 8, **characterized in that** said body is immersed in the composition.

12. Process according to claim 8, **characterized in that** the composition is applied to said body by topical route.

## Patentansprüche

1. Verwendung mindestens einer Verbindung der Formel
(I) R-(OCH₂)ₙ-OR', worin R und R' gleich oder verschieden sind und für einen linearen oder verzweigten Alkylrest mit 1 bis 5 Kohlenstoffatomen stehen und n für einen Index mit einem Wert zwischen 1 und 8 steht, und/oder
(II) 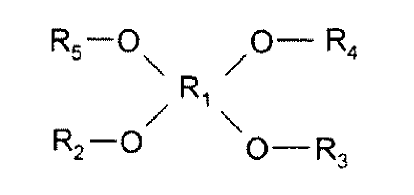
worin R₂, R₃, R₄ und R₅ unabhängig für einen linearen oder verzweigten Alkylrest mit 1 bis 8 Kohlenstoffatomen stehen oder R₂ und R₅ und/oder R₃ und R₄ gemeinsam und mit den beiden Sauerstoffatomen, an die sie gebunden sind, einen 5- oder 6-gliedrigen gesättigten oder ungesättigten Heterocyclus bilden, der gegebenenfalls durch eine oder mehrere unter OH, CH₂OH oder einem linearen oder verzweigten Alkylrest mit 1 bis 8 Kohlenstoffatomen ausgewählte Gruppen substituiert ist; und R₁ für eine CH-R₆-CH-Gruppe steht, wobei R₆ eine Bindung bildet oder für einen linearen oder verzweigten Alkylenrest mit 1 bis 5 Kohlenstoffatomen oder einen gesättigten oder ungesättigten Carbocyclus mit 3 bis 8 Kohlenstoffatomen steht; oder R₁ für einen gesättigten oder ungesättigten Carbocyclus mit 3 bis 8 Kohlenstoffatomen steht; zur Konservierung des menschlichen oder tierischen Körpers und/oder zur Einbalsamierung von toten Körpern.

2. Verwendung nach Anspruch 1, **dadurch gekennzeichnet, daß** die Verbindung unter CH₃-(OCH₂)-OCH₃, CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)-OC₂H₅, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, C₄H₉-(OCH₂)-OC₄H₉, CH₃-(OCH₂)-OC₂H₅, 1,1,2,2-Tetraethoxyethan, 1,1,3,3-Tetraethoxypropan, 1,1,3,3-Tetramethoxypropan, 1,4,9,12-Tetraoxadispiro[4,2,4,2]tetradecan und Mischungen davon und ganz besonders bevorzugt unter CH₃-(OCH₂)-OCH₃, CH₃-(OCH₂)₂-OCH₃, C₂H₅-(OCH₂)-OC₂H₅, C₄H₉-(OCH₂)-OC₄H₉, 1,1,2,2-Tetraethoxyethan, 1,1,3,3-Tetraethoxypropan, 1,1,3,3-Tetramethoxypropan, 1,4,9,12-Tetraoxadispiro[4,2,4,2]tetradecan und Mischungen davon ausgewählt ist.

3. Verwendung nach Anspruch 1 oder Anspruch 2, **dadurch gekennzeichnet, daß** die Verbindung der Formel (I) eine symmetrische Struktur aufweist.

4. Verwendung nach einem der Ansprüche 1 bis 3, **dadurch gekennzeichnet, daß** es sich bei der Verbindung um POMM₂₋₈ handelt, wobei es sich um eine Mischung von Verbindungen der Formel CH₃-(OCH₂)ₙ-OCH₃ mit n zwischen 2 und 8 handelt.

5. Verwendung nach einem der Ansprüche 1 bis 4, **dadurch gekennzeichnet, daß** es sich bei der Verbindung um POME₁₋₈ handelt, wobei es sich um eine Mischung von Verbindungen der Formel C₂H₅-(OCH₂)ₙ-OC₂H₅ mit n zwischen 1 und 8 handelt.

6. Zusammensetzung, enthaltend mindestens eine der Verbindungen nach einem der Ansprüche 1 bis 5 und Glycerin.

7. Zusammensetzung, enthaltend 12-70 Vol.-% der Verbindung nach einem der Ansprüche 1 bis 5, 10-15 Vol-% Glycerin, 15-75 Vol.-% mindestens eines Alkohols und 0-10 Vol.-% mindestens eines Farbmittels und/oder Aromatisierungsmittels.

8. Verfahren zur Konservierung eines menschlichen oder tierischen Körpers und/oder zur Einbalsamierung eines toten Körpers, bei dem man dem Körper eine Zusammensetzung, die mindestens eine Verbindung nach einem der Ansprüche 1 bis 5 enthält, verabreicht.

9. Verfahren nach Anspruch 8, **dadurch gekennzeichnet, daß** man die Zusammensetzung auf intraarteriellem Wege in den Körper injiziert.

10. Verfahren nach Anspruch 8, **dadurch gekennzeichnet, daß** man die Zusammensetzung in dem Körper perfundiert.

11. Verfahren nach Anspruch 8, **dadurch gekennzeichnet, daß** man den Körper in die Zusammensetzung eintaucht.

12. Verfahren nach Anspruch 8, **dadurch gekennzeichnet, daß** man die Zusammensetzung auf topischem Wege auf den Körper aufbringt.
